# DEMANDE DE BREVET EUROPEEN

(11) **EP 1 595 849 A1**
(43) Date de publication de la demande: **16.11.2005**
(21) Numéro de dépôt: 04368035.4
(22) Date de dépôt: 29.04.2004
(51) Int. Cl.: C02F 1/42

(54) **Flacon filtre purificateur de l'eau**

(71) Demandeur: Spangenberg, Henri, 06570 Saint Paul de Vence (FR)
(72) Inventeur: Spangenberg, Henri, 06570 Saint Paul de Vence (FR)

(57) **Abrégé**

L'Invention concerne un Dispositif permettant de Filtrer et Purifier l'Eau du Robinet pour les Besoins Alimentaires des Usagers.

Le but recherché est : La Consommation, à domicile, d'une Eau de Ville parfaitement Fiable donc Saine.

Le Filtre Purificateur, objet de cette Invention, permet de le faire, pour chacun d'entre nous, pour un coût modique. Ce Filtre Purificateur se positionne à l'Intérieur d'un Récipient Stylisé, composé de 2 Parties se mariant, l'une et l'autre de façon étanche. Il est interchangeable, périodiquement.

Sa conception est simple : Les 3 matières filtrantes le composant sont superposées en 5 couches d'épaisseurs et volumes inégaux :
- Le Charbon Actif imprégné d'Argent 3 couches : Pour l'Adsorption du Chlore, des Bactéries, Pesticides et Matières Organiques Dissoutes.
- Les Résines Cationiques : Pour le contrôle et la régulation des sels de calcium et sels de Magnésium.
- Les Résines Anioniques : Pour la neutralisation des Nitrates et des Phosphates.

## Description

La présente invention concerne un dispositif permettant de filtrer et purifier l'eau s'écoulant du robinet.

L'état de la Technique, généralement utilisée, dans ce domaine, revêt des formes diverses et variées, lesquelles sont souvent coûteuses et complexes à utiliser, et, à maintenir en bon état de fonctionnement, pour l'usager, et, ne lui permettent pas toujours de consommer une eau correctement traitée.

Des formules simples existent, actuellement, sur le Marché qui présentent, quant à elles, l'inconvénient majeur de n'éliminer qu'une partie des éléments nuisibles existant dans l'eau s'écoulant du robinet.

Le Dispositif selon l'Invention permet, en ce qui le concerne, d'obtenir le résultat recherché, à savoir : Une Eau Parfaitement Filtrée et Purifiée*,* grâce à un moyen simple à utiliser, et, d'un coût accessible à tous.

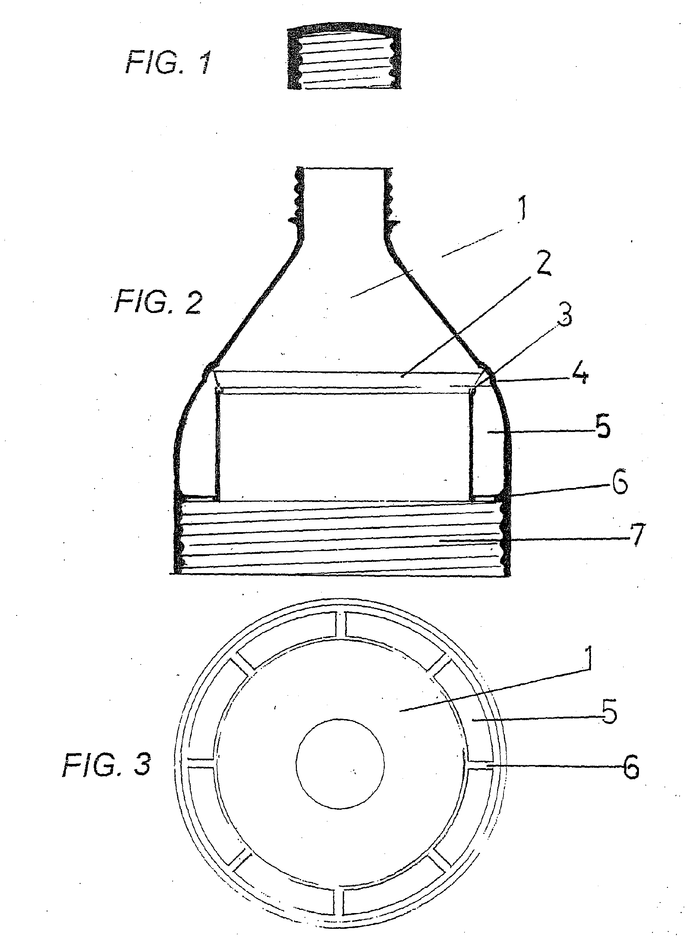

Le filtre Purificateur Individuel, objet de l'Invention, comporte 1 récipient (carafe) composé de parties distinctes :
- Dans la partie supérieure (Fig.1), un orifice permet l'entrée de l'eau s'écoulant du robinet, et un bouchon de protection se visse sur le col du récipient.
- La partie gauche du Récipient (Fig.2) est, en fait, la chambre de Réception (1) de l'Eau, avant sa Filtration.

Cette Partie Haute vient se visser sur la Partie Basse (Fig.7, Corps du Récipient), hermétiquement, afin d'assurer une Parfaite Etanchéité de l'ensemble.

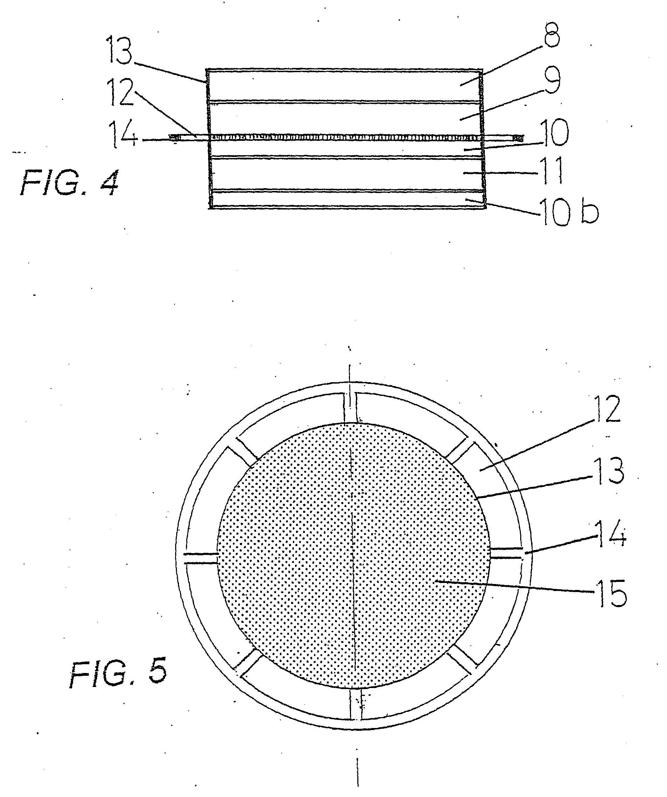

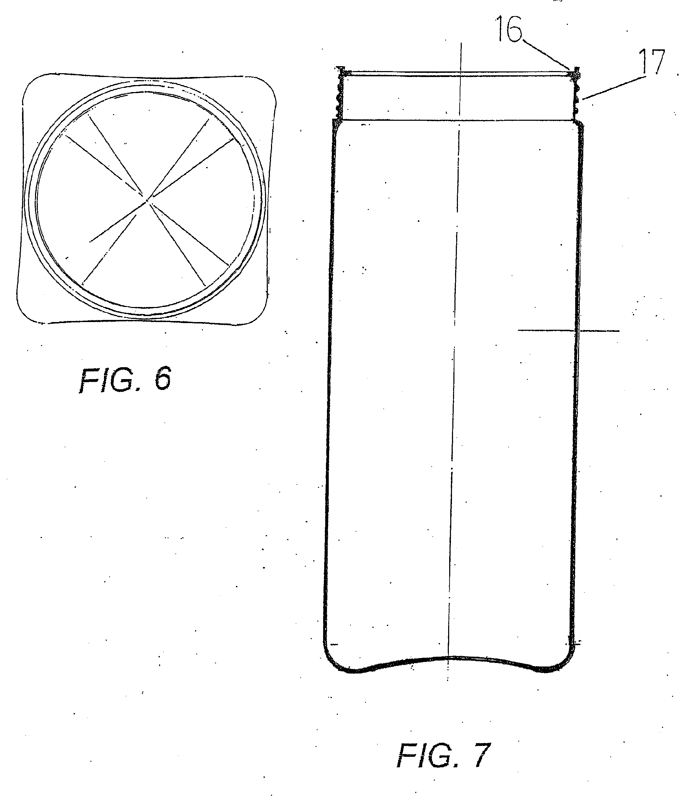

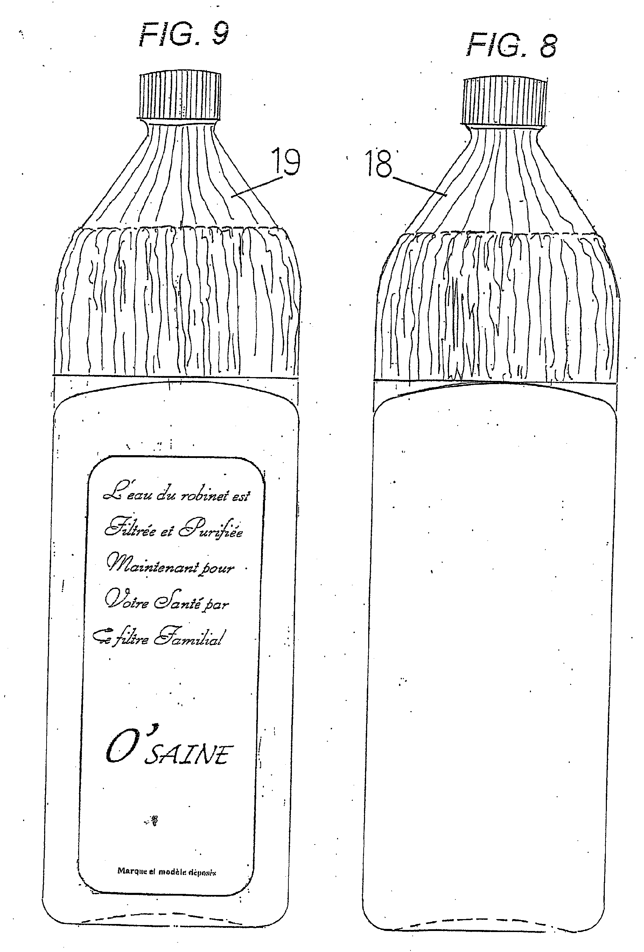

Elle renferme le Filtre (Fig.4), lui-même amovible, qui est logé entre les 2 Parties Basse et Haute du Récipient lesquelles sont munies d'un Bourrelet Arrêtoir Interne (6, 16) moulé dans la matière, sur la partie inférieure de l'un (6), et, la partie supérieure de l'autre (16).

Par ailleurs, la Partie Haute comprend un Logement Interne Circulaire (4) moulé dans la matière, et, bombé vers l'extérieur, servant de point de fermeture ou d'ouverture au passage de l'eau dans les parties latérales (5) une collerette mobile circulaire (2) montée sur un axe (3) permettant à l'effet mécanique de se produire, tel un Clapet Anti-Retour, sous la pression de l'eau, dans les 2 sens :
1 °/ Sens du Remplissage : Fermeture des Passages latéraux, toute la collerette (360°) venant buter, sous cette pression, dans le logement interne, le liquide à Filtrer ne pouvant passer qu'au travers du Filtre, en position verticale du Récipient.
2°/ Sens de l'utilisation : Ouverture des Passages Latéraux, qui ne peut se produire que par l'Inversion de la poussée, en retournant simplement le Récipient, pour faire basculer la Collerette dans l'autre sens, afin de verser l'Eau filtrée et Purifiée dans les verres.

La Partie Basse du Récipient (Fig.7) est, en conséquence, la Chambre de Réception de l'eau, après sa Filtration et Purification.

Elle est dotée, dans sa partie supérieure, d'un Bourrelet Arrêtoir (16) sur lequel vient se poser le Filtre.

Cette Partie Basse du Récipient est, également, dotée, dans sa masse extérieure d'un Filetage mâle (17), lequel s'accouplant au Filetage Femelle (7) de la Partie Haute intérieure, assure, en même temps, que l'efficacité de Filtration du Système, la Parfaite Etanchéité de l'Ensemble.

La partie Interne du Récipient (Fig.8) est représentée par le Filtre Purificateur (Fig.4). Celui-ci est constitué de 5 couches superposées de Charbon Actif dopé avec des Ions d'Argent (8-10-10b), de Résines Echangeuses d'Ions Cationiques (9) et Anioniques (11) séparées par une fine couche de Charbon Actif.

La fonction de chacun des éléments de ce filtre est :
- Charbon Actif imprégné d'Argent : Adsorption du Chlore, des Bactéries, Pesticides et Matière Organique dissoute.
- Résines Cationiques : Sels de Calcium, Sels de Magnésium.
- Résines Anioniques : Nitrates et Phosphates.

L'eau filtrée obtenue aura de bonnes qualités organoleptiques (goût, odeur, couleur) grâce à la présence du charbon actif qui élimine les substances organiques dissoutes, les pesticides et le chlore.

Le goût, la présentation des boissons chaudes et des aliments cuisinés, (en particulier l'élimination des dépôts apparaissant aux surfaces du thé par exemple) et un lavage efficace des légumes seront nettement améliorés. Effectivement le taux des minéraux présents (sels de calcium et accessoirement magnésium) sera fortement diminué par des résines échangeuses d'ions cationiques et les nitrates et phosphates par des résines anioniques.

La prolifération des bactéries sera réduite par le fait que le charbon actif soit imprégné d'argent et présent en grande quantité sur 3 niveaux dans le filtre.

Le filtre étant jetable et la quantité de charbon actif nettement en excès par rapport à son utilisation, la libération des matières organiques accumulées sur celui-ci et la prolifération bactérienne seront évitées.

Ce filtre sera optimisé à partir de quantités connues de substances chimiques pouvant être présentes dans l'eau du robinet tel que nitrates, chlore, plomb, cuivre, sels de calcium, sels de magnésium..... Les quantités respectives en charbon actif et en résine échangeuses d'ions nécessaires à leur élimination seront déterminées.

Les influences de la forme du filtre (hauteur et largeur) et du débit de l'eau qui changent la surface de contact et le temps de contact eau - surface active du filtre seront prises en considérations.

La prolifération des bactéries sera caractérisée en fonction du temps et de la température.

La Fonction de chacun des éléments de ce Filtre Purificateur est :
- Charbon Actif imprégné d'Argent : Adsorption du Chlore, des Bactéries, Pesticides et Matière Organique Dissoute.
- Résines Cationiques : Sels de Calcium, sels de Magnésium.
- Résines Anioniques : Nitrates et Phosphates.

A titre d'exemple non limitatif, le Boîtier du Filtre Purificateur d'Eau mesurera entre 15 et 30 millimètres d'épaisseur de Matières Filtrantes. Préférablement 20 millimètres.

La superficie des Entrée et Sortie, perforées, du Boîtier (15) contenant ces Matières Filtrantes, sera approximativement de 30 cm².

## Revendications

1. Le Flacon Filtre Purificateur de l'Eau, après sa sortie du robinet, est selon l'invention, et, la Revendication, un Dispositif, composé de Parties Distinctes ; qui permet, à l'utilisateur, de disposer d'une eau saine.

2. Le Dispositif, selon la Revendication, comporte, dans sa partie supérieure (Fig.1) un Orifice qui permet l'entrée de l'Eau à traiter, dans le Récipient. Un bouchon de protection, se vissant sur le col, y est incorporé.

3. Le Dispositif, selon la Revendication, comporte la Partie Haute du Récipient (Fig.2), lequel vient se visser, hermétiquement, sur la Partie Basse (Fig.7), Corps du Récipient. Cette Partie Haute du Récipient est, en fait, la chambre de Réception (1) de l'eau Coulant du Robinet. Elle renferme le Filtre (Fig.4) qui est posé sur le Haut de la Partie Basse (Fig.7) du Récipient.
Le Filtre est maintenu entre les 2 Parties, Basse et Haute (6, 16) par le vissage de l'ensemble, hermétiquement.

4. Le Dispositif, selon la Revendication, comporte la Partie Basse (Corps du Récipient, Fig.7). C'est la Chambre de Réception de l'Eau, après sa Filtration et Purification. Cette partie basse du Récipient est dotée, dans sa partie supérieure, d'un Bourrelet Arrêtoir Interne, moulé dans la matière, sur lequel est posé le Filtre (16).
Le Filetage Mâle extérieur, moulé dans la masse de la matière, se situe sur la partie supérieure (17) du Corps du Récipient. Il constitue avec le Filetage Femelle intérieur de la Partie Haute et leur Vissage, le moyen Protecteur Hermétique du Filtre Purificateur (Fig.4) qui est logé à l'Intérieur du Récipient.

5. Le Dispositif, selon la Revendication, est le Coeur du Filtre Purificateur (Fig.4 et 5), qui est constitué de 5 couchés superposées de Charbon Actif dopé avec des Ions d'Argent (8, 10& 10b), de Résines Echangeuses d'Ions Cationiques (9) et Anioniques (11) séparées par une fine couche de Charbon Actif.
